# NEUE EUROPÄISCHE PATENTSCHRIFT

(11) **EP 1 017 159 B2**
(45) Veröffentlichungstag und Bekanntmachung des Hinweises auf die Entscheidung über den Einspruch: **28.07.2010**
(45) Hinweis auf die Patenterteilung: 27.07.2005
(21) Anmeldenummer: 99125274.3
(22) Anmeldetag: 18.12.1999
(51) Int. Cl.: H02P 6/08

(54) **Verfahren zur Regelung eines spannungs-/frequenzumrichtergesteuerten Ein- oder Mehrphasen-Elektromotors**
Control method of a single-phase or polyphase voltage/frequency converter controlled motor
Méthode de régulation d'un moteur électrique monophasé ou polyphasé commandé par un convertisseur tension/fréquence

(30) Priorität: 28.12.1998 DE 19860446
(43) Veröffentlichungstag der Anmeldung: 05.07.2000
(73) Patentinhaber: GRUNDFOS A/S, DK-8850 Bjerringbro (DK)
(72) Erfinder: Due Jensen, Niels, 8850 Bjerringbro (DK); Vadstrup, Pierre, 8381 Mundelstrup (DK)
(74) Vertreter: Vollmann, Heiko

(56) Entgegenhaltungen:
- EP-A- 0 800 262
- EP-A- 0 801 463
- EP-A- 0 801 463
- EP-A- 0 993 108
- US-A- 5 198 733
- US-A- 5 378 976
- US-A- 5 378 976
- US-A- 5 448 149
- PATENT ABSTRACTS OF JAPAN vol. 1998, no. 08, 30. Juni 1998 (1998-06-30) -& JP 10 080180 A (FUJII SEIMITSU KAITENKI SEISAKUSHO:KK), 24. März 1998 (1998-03-24)

## Beschreibung

Die Erfindung betrifft ein Verfahren sowie eine Vorrichtung zur Regelung eines spannungs-/frequenzumrichtergesteuerten Ein- oder Mehrphasen-Permanentmagnet motors, der mit sinusförmiger oder abgewandelt sinusförmiger Wechselspannung beaufschlagt wird.

Mehrphasen-Permanentmagnetmotoren sind beispielsweise dreiphasig ausgebildet und weisen rotorseitig Permanentmagnete und statorseitig Wicklungen auf. Um den Rotor in Drehung zu versetzen, muss in der beispielsweise dreiphasigen Ständerwicklung ein rotierendes Drehfeld erzeugt werden, was beispielsweise mit Hilfe eines Wechselrichters in Form eines Spannungs- bzw. Frequenzumrichters erfolgen kann. Dabei unterscheidet man Blockkommutierung und Sinuskommutierung.

Bei der Blockkommutierung wird eine konstante Zwischenkreisspannung in Abhängigkeit von der Rotorlage mit wechselnder Polarität auf die jeweiligen Phasenwicklungen geschaltet. Dadurch werden in die Phasenwicklungen gegen die trapezförmige Motorinduktionsspannung blockförmige Ströme eingeprägt. Die Motordrehzahl wird durch die Ausgangsspannung des Umrichters bestimmt, deren Mittelwert durch Pulsbreitenmodulation verändert werden kann.

Bei einem sinuskommutierten Motor, wie er Gegenstand der vorliegenden Erfindung ist, wird gegen die sinusförmige Motorinduktionsspannung ein sinusförmiger Strom in die Phasenwicklungen eingeprägt. Im Unterschied zur Blockkommutierung werden die Wicklungen kontinuierlich vom Strom durchflossen. Der pulsbreitenmodulierte Wechselrichter variiert die Breite der Einzelimpulse so, dass als Grundschwingung eine sinusförmige Spannung entsteht.

Unabhängig von der Art der Kommutierung ist man stets bemüht, das rotierende Drehfeld im Stator in Übereinstimmung mit dem magnetischen Feld des Rotors zu bringen, da dann der Motor besonders ruhig und mit gleichmäßigem Moment läuft. Dies kann beispielsweise dadurch erfolgen, dass die Phasenverschiebung zwischen dem durch Spannungsbeaufschlagung erzeugten Drehfeld und der Eigeninduktion des Motors ermittelt und die Motoransteuerung entsprechend korrigiert wird. Diese Fehllage zwischen dem im Stator rotierenden Drehfeld und dem im Rotor durch Permanentmagnete erzeugten Drehfeld bzw. der dadurch erzeugten Induktion kann sensorisch, beispielsweise über im Motor nahe dem Stator angebrachte Hallsensoren, ermittelt werden. Eine solche Erfassung über Rotorpositionssensoren ist baulich recht aufwendig und erfordert darüber hinaus noch eine aufwendige Auswerteelektronik, was sich jedoch bei sinuskommutierten Motoren derzeit nicht umgehen lässt, da die innerhalb der Motorphasenwicklungen induzierten Spannungen aufgrund der kontinuierlichen sinusförmigen Spannungsbeaufschlagung praktisch nicht messbar ist.

Aus US-A-5378976 ist ein sinuskommutierter Elektromotor bekannt, bei dem eine Regelung vorgesehen ist, welche für eine möglichst optimale Kommutierung des Motors sorgt, in dem sie die Phasenlage zwischen dem von außen aufgeprägten elektrischen Feld einerseits und der des rotierenden elektromagnetischen Feldes andererseits überwacht und bei Abweichungen durch Änderung der Spannung korrigierend eingreift. Hierzu ist ein Phasendetektor vorgesehen, der die Phasenlage anhand der elektrischen Werte des Motors ermittelt. Anhand der elektrischen Werte kann diese Phasenlage jedoch nicht fehlerfrei bestimmt werden, da sich die gemessenen elektrischen Werte stets aus dem Back-EMF sowie dem induktiven Widerstand der entsprechenden Motorphasenwicklung ergeben. Das Back-EMF wird also nur dann exakt ermittelt, wenn der Strom in der jeweiligen Motorphasenwicklung Null ist und während der Messung auch Null bleibt. Da dies in der Praxis nicht möglich ist, ist die Messung stets fehlerbehaftet. Zur Kompensation dieses Fehlers ist eine Messeinrichtung vorgesehen, welche sensorisch die Rotorgeschwindigkeit erfasst, was aufwändig ist. Darüber hinaus ist auch die elektronische Auswertung der zur Verfügung stehenden elektrischen Signale kompliziert. Schließlich ist für die Sensorik zur Erfassung der Rotorgeschwindigkeit zusätzlicher Bauraum im Motor erforderlich, der somit zur Leistungsoptimierung des Motors nicht genutzt werden kann. Auch ist die Sensorik aufgrund von Wäremeinwirkungen, Schwingungen und dergleichen Beeinträchtigungen im Motor störanfällig.

Zwar kann bei blockkommutierten Motoren die Eigeninduktion auch erfasst werden, indem diese in der gerade stromfreien Phase gemessen wird, wie dies beispielsweise aus EP-A-0 801 463 bekannt ist, doch haben die blockkommutierten Motoren den Nachteil, dass diese aufgrund ihrer harten Ansteuerung in der Regel eine deutlich schlechtere Laufkultur als die sinuskommutierten Motoren aufweisen, insbesondere unruhiger laufen und lautere Laufgeräusche aufweisen. Letzteres ist insbesondere bei der Verwendung in Verbindung mit Heizungsumwälzpumpen von Nachteil, da sich die akustischen Schwingungen des Antriebs nahezu ungedämpft über das Heizungsrohrsystem ausbreiten können.

Ausgehend von dem vorgenannten Stand der Technik nach US-A-5,378,976 liegt der vorliegenden Erfindung die Aufgabe zugrunde, einen laufruhigen sinuskommutierten Ein- oder Mehrphasen permanentmagnetmotor zu schaffen, bei dem die Rotorpositions erfassung vereinfacht ist. Dabei soll der konstruktive Aufwand und der Messaufwand möglichst gering sein.

Der verfahrensmäßige Teil dieser Aufgabe wird durch die in Anspruch 1 angegebenen Merkmale gelöst. Anspruch 8 definiert den vorrichtungsmäßigen Aufbau der Erfindung.

Die Erfindung sieht also vor, die Eigeninduktion des Motors, insbesondere die in mindestens einer Motorphasenwicklung induzierte Spannung zu messen und mit dem Wicklungsstrom derselben Motorphasenwicklung in Übereinstimmung bzw. in ein vorbestimmtes Verhältnis zu bringen, und zwar dadurch, dass je nach Phasenlage durch die Regelung die dem Motor zugeführte Frequenz und/oder Spannung im nächsten Regelintervall verringert oder vergrößert wird, bis die Phasenlagen von Eigeninduktion und vom zugehörigen Phasenwicklungsstrom übereinstimmen oder im Wesentlichen übereinstimmen bzw. das vorbestimmte Verhältnis aufweisen. Dann und nur dann ist ein besonders ruhiger und geräuscharmer Lauf des Motors zu erwarten, da dann das rotierende Drehfeld der Ständerwicklung gegenüber dem rotierenden Magnetfeld des Rotors im gewünschten und bestimmungsgemäßen Verhältnis stehen. Zweckmäßigerweise erfolgt dabei die Regelung so, dass die Frequenzerhöhung bzw. Frequenzverringerung und/oder die Spannungserhöhung bzw. -verringerung in Abhängigkeit des gemessenen Phasenunterschiedes für das nächste Regelintervall festgelegt wird, beispielsweise proportional oder nach anderen geeigneten Regelkurven.

Das erfindungsgemäße Verfahren kann beispielsweise bei einem Permanentmagnetmotor als Kommutierungsverfahren eingesetzt werden. Es kann jedoch auch unabhängig, also bei Einsatz eines anderen Kommutierungsverfahrens zusätzlich eingesetzt werden, um den Motorlauf zu optimieren. Der besondere Vorteil dieses Verfahrens im Vergleich zu dem üblichen, einleitend beschriebenen Verfahren zur Wirkungsgradoptimierung liegt darin, dass bei dem erfindungsgemäßen Verfahren stets sofort korrigierend eingegriffen wird, wohingegen bei dem bekannten Verfahren quasi durch Vorgeben unterschiedlicher Einstellungen ein guter Betriebspunkt empirisch ermittelt wird.

Das Ergebnis der Regelung ist umso genauer, je häufiger gemessen und nachgeregelt wird. Aus diesem Grunde ist es von Vorteil, die Eigeninduktion (back electromotive force) durch entsprechende Strommessung in jeder Motorphasenwicklung zu ermitteln, um somit auch in jeder Motorphasenwicklung regeln zu können.

Um die Eigeninduktion, also die im Motor induzierte Spannung auf einfache Weise und ohne komplizierte elektronische Auswerteinrichtungen messen zu können, sieht die Erfindung vor, die Motorphasenwicklung, in der die Eigeninduktion gemessen werden soll, während der Messung vom Versorgungsnetz zu trennen, damit die Messung nicht durch die anliegende Versorgungsspannung gestört wird. Eine Trennung vom Netz kann ggf. auch entfallen, wenn nur während eines vergleichsweise kurzen Zeitintervalls gemessen wird, in dem die Versorgungsspannung Null ist.

Gemäß der Erfindung wird die Messung der induzierten Spannung durch Detektion des Nulldurchganges des Motorstromes in der entsprechenden Motorphasenwicklung ausgelöst, das heißt, dass die jeweilige Motorphasenwicklung unmittelbar nach Detektion des Nulldurchganges des zugehörigen Phasenwicklungsstromes abgeschaltet, d. h. vom Versorgungsnetz getrennt wird und dann in einem vergleichsweise kurzen Zeitintervall die Eigeninduktion dieser Motorphasenwicklung gemessen wird, wonach diese Motorphasenwicklung wiederum mit dem Versorgungsnetz verbunden wird. Es hat sich gezeigt, dass für die Messung der Eigeninduktion nur ein Bruchteil einer Periode erforderlich ist, so dass die Trennung vom Versorgungsnetz in der Praxis nicht spürbar ist. Die Detektion des Nulldurchgangs hat sowohl messtechnisch als auch schaltungstechnisch besondere Vorteile, denn dadurch ist zum einen die Phasenlage des rotierenden Drehfeldes erfasst, und zum anderen kann die Abschaltung vom Versorgungsnetz besonders schonend erfolgen, da aufgrund des in diesem Moment in der betreffenden Motorphasenwicklung nicht vorhandenen Stromes leistungsfrei geschaltet werden kann. Es können hierfür im übrigen die im Umrichter ohnehin vorhandenen elektronischen Schalter herangezogen werden.

Die Eigeninduktion wird gemäß der Erfindung anhand des Phasenwicklungsstromes bestimmt, wenn dieser bei kurzgeschlossener Motorphasenwicklung gemessen wird. Dies hat den Vorteil, dass lediglich eine Messeinrichtung erforderlich ist, mit der dann sowohl der Nulldurchgang des Phasenwicklungsstromes als auch der bei kurzgeschlossener Motorphasenwicklung aufgrund der Eigeninduktion sich einstellende Phasenwicklungsstrom gemessen werden kann. Wenn das Messintervall genügend kurz gewählt wird, braucht hierbei noch nicht einmal eine Trennung der Motorphasenwicklung vom Versorgungsnetz zu erfolgen, da die Versorgungsspannung in diesem Bereich ohnehin Null ist und somit das Versorgungsnetz durch Kurzschluss nicht belastet wird.

Eine besonders exakte Regelung ist dann möglich, wenn die Eigeninduktion nach zwei aufeinanderfolgenden Nulldurchgängen des Phasenwicklungsstromes dersel ben Motorphasenwicklung gemessen wird, da dann zu einem sehr frühen Zeitpunkt schon die Wirkung der zum Zwecke der Regelung durchgeführten Frequenzänderung erkennbar und ggf. nachregelbar ist.

Die Regelung erfolgt dergestalt, dass zunächst einmal bestimmt wird, ob bei dem gerade detektierten Nulldurchgang der Phasenwicklungsstrom im Anstieg oder im Abfallen begriffen ist. Diese Information steht umrichterseitig ohne weiteres zur Verfügung, kann aber auch messtechnisch ohne großen Aufwand erfasst werden. Es wird dann die Phasenlage der induzierten Spannung bzw. des induzierten Stroms bei kurzgeschlossener Motorphasenwicklung, also des Messsignals gegenüber dem Nulldurchgang des Phasenwicklungsstromes ermittelt, wobei sich bei vorauseilendem Phasenwicklungsstrom ein positives Vorzeichen und bei nacheilendem Phasenwicklungsstrom ein negatives Vorzeichen der Phasenlage ergibt. Unter der Voraussetzung eines steigenden Phasenwicklungsstromes wird dann bei positivem Messsignal die dem Motor zugeführte Frequenz im nächsten Regelintervall erhöht und bei negativem Messsignal im nächsten Regelintervall verringert. Wenn der Phasenwicklungsstrom fällt, erfolgt die Regelkorrektur in genau umgekehrter Weise. Statt der vorbeschriebenen Frequenzänderung kann auch oder zusätzlich die an der Motorphasenwicklung anliegende Spannung geändert werden, wobei eine Spannungsabsenkung einer Frequenzerhöhung entspricht und umgekehrt.

Das erfindungsgemäße Verfahren ermöglicht mit messtechnisch geringem Aufwand und unter Ausnutzung umrichterseitig weitgehend ohnehin vorhandener Bauteile eine Sinuskommutierung mit Phasenregelung, welche eine hohe Laufruhe des Motors und geringe Geräuschemission gewährleistet. Es können jedoch auch andere Kommutierungsverfahren oder Motoransteuerungen damit verbessert werden.

Der vorrichtungsmäßige Aufbau der Erfindung ist dadurch gekennzeichnet, dass dem Spannungs-/Frequenzumrichter eine Regeleinrichtung zugeordnet ist, welche als Stellgröße die Ausgangsfrequenz und/oder die Spannung des Umrichters steuert. Die Regelgröße ist dabei die Phasenverschiebung, zu deren Erfassung mindestens eine Messeinrichtung vorgesehen ist. Der Einsatz nur einer Messeinrichtung ist dadurch möglich, dass die Eigeninduktion nicht wie üblich anhand der induzierten Spannung, sondern anhand des induzierten Stroms bei kurzgeschlossener Wicklung ermittelt wird. Dann kann mit einer Messeinrichtung wie vorbeschrieben sowohl der Nulldurchgang detektiert als auch der Phasenwicklungsstrom bei kurzgeschlossener Wicklung und damit die Eigeninduktion erfasst werden. Die Ausgangssignale dieser Messeinrichtungen sind einer Auswerteeinrichtung zugeführt, welche die Phasenlage der Eigeninduktion mit der des Phasenwicklungsstromes derselben Motorphasenwicklung ermittelt und entsprechend dem ermittelten Wert ein Auswertesignal an die Regeleinrichtung abgibt, wodurch die Regeleinrichtung eine geeignete Ansteuerung des Umrichters vornimmt, und zwar so, dass bei voreilender Phase der Eigeninduktion dem Umrichter ein Regelsignal zugeführt wird, das eine Frequenzerhöhung /Spannungsabsenkung im nächsten Regelintervall bewirkt, bis die Phasenlagen der Eigeninduktion und des Phasenwicklungsstroms übereinstimmen bzw. ein vorbestimmtes Verhältnis aufweisen. Wenn die Eigeninduktion dem Phasenwicklungsstrom nacheilt, wird das dem Umrichter zugeführte Regelsignal so sein, dass eine Frequenzverringerung / Spannungserhöhung im nächsten Regelintervall bewirkt wird, und zwar wiederum so lange, bis die Phasenlagen der Eigeninduktion und des Phasenwicklungsstromes übereinstimmen oder zumindest in zuvor festgelegten Grenzen liegen. Es wird deutlich, dass der vorrichtungsmäßige Aufbau vergleichsweise einfach ist, da die Regeleinrichtung lediglich eine Messeinrichtung in Form eines Strommessers aufzuweisen braucht. Dabei können die erforderlichen Messeinrichtungen vereinfacht ausgebildet sein, da eine vollständige Erfassung des Stromverlaufes in der jeweiligen Motorphasenwicklung nicht erforderlich ist, sondern nur der Zeitpunkt des Nulldurchganges. Auch der die Eigeninduktion Strommesser bei Verwendung nur einer Messeinrichtung kann vereinfacht ausgebildet sein, da lediglich die Erfassung der Richtung des Stromes, also des Vorzeichens erforderlich ist und nicht denen Betrag. Die Auswerteeinrichtung kann beispielsweise durch den in modernen Regeleinrichtungen üblicherweise vorhandenen Mikroprozessor softwaremäßig implementiert werden. Die gesamte Vorrichtung kann in die Regelung eines kompakten, am Motor einer Arbeitsmaschine angeordneten Frequenzumrichters integriert werden oder Bestandteil der übrigen Steuerung sein.

Vorteilhaft ist die Messeinrichtung nicht nur zur Messung der Eigeninduktion einer Motorphasenwicklung, sondern zur Messung der Eigeninduktion aller Motorphasenwicklungen vorgesehen. Da die Messung der Eigeninduktion nicht über die gesamte Zeit, sondern nur ein vergleichsweise kleines Zeitfenster erfolgen muss, genügt eine Messeinrichtung, die durch schnelle elektronische Schalter nach Bedarf mit der jeweils zu messenden Motorphasenwicklung verbunden wird. Es kann jedoch auch für jede Motorphasenwicklung eine gesonderte Messeinrichtung vorgesehen sein.

Zweckmäßig weist die Messeinrichtung einen Nulldurchgangsdetektor auf oder ist als solcher ausgebildet. Die Detektion des Nulldurchganges des Wicklungsstromes der gerade zu messenden Phase gibt den Zeitpunkt an, der zur Messung der Eigeninduktion besonders vorteilhaft ist. Wie bereits eingangs erläutert, kann eine Erfassung der Eigeninduktion, also eine Messung der in der jeweiligen Motorphasenwicklung induzierten Spannung, ohne erheblichen messtechnischen bzw. auswertetechnischen Aufwand nur dann erfolgen, wenn die entsprechende Motorphasenwicklung abgeschaltet oder spannungsfrei ist. Dieses Abschalten zu Messzwecken erfolgt zweckmäßigerweise sofort bei Detektion des Nulldurchganges, da dann lastfrei geschaltet werden kann und im übrigen die dem Motor zugeführte elektrische Leistung zumindest dann, wenn das Messintervall entsprechend kurz gewählt wird, durch diese kurzzeitige Netztrennung praktisch nicht vermindert wird.

Die Auswerteeinrichtung ermittelt die Phasendifferenz zwischen Phasenwicklungsstrom und Eigeninduktion derselben Phase und gibt ein beispielsweise proportionales Auswertesignal ab, dessen Vorzeichen bei voreilender Phase der Eigeninduktion beispielsweise positiv und bei nacheilender Phase der Eigeninduktion negativ ist, wobei die Signalgröße der Phasendifferenz betragsmäßig entspricht. Die Regeleinrichtung wandelt dieses Auswertesignal in ein entsprechendes Stellsignal für den Umrichter um, dergestalt, dass die dem Motor angelegte Frequenz und/oder Spannung in Abhängigkeit zum erfassten Phasenunterschied zwischen der Eigeninduktion und dem Phasenwicklungsstrom erhöht, verringert oder konstant gehalten wird.

Unter sinusförmiger Kommutierung im Sinne der Erfindung sind nicht nur rein mathematisch sinusförmige Stromverläufe in den einzelnen Wicklungen zu verstehen, sondern können auch abgeflachte oder sonstwie abgewandelte Formverläufe verstanden werden. Bei einem Dreiphasen-Permanentmagnetmotor sind die Phasenströme um jeweils 120° zueinander versetzt.

Bei einem Mehrphasen-Permanentmagnetmotor weicht die Anzahl der Motorwicklungen üblicherweise von der Zahl der Phasen ab. Gleichwohl sind die Motorwicklungen untereinander so miteinander verbunden, dass sich eine Anzahl von einzelansteuerbaren Wicklungen ergibt, die der Zahl der Motorphasen entspricht. Um dies zu verdeutlichen, ist der Begriff Phasenwicklung bzw. Motorphasenwicklung eingeführt worden. Hierunter sind sämtliche Wicklungen derselben Motorphase zu verstehen.

Die Erfindung ist nachfolgend anhand eines Ausführungsbeispiels näher erläutert. Es zeigen:
- Fig. 1:: ein Blockschaltbild der erfindungsgemäßen Vorrichtung,
- Fig. 2:: den prinzipiellen Aufbau eines Dreiphasen-Permanentmagnetmotors,
- Fig. 3:: ein Ersatzschaltbild eines solchen Motors,
- Fig. 4:: ein Blockschaltbild, welches das Grundprinzip der Spannungs/Frequenzumrichteransteuerung des Motors veranschaulicht,
- Fig. 5:: ein Schaubild, das den Spannungs- und Stromverlauf in einer Phasenwicklung des Motors zeigt,
- Fig. 6:: ein Schaubild vom zeitlichen Verlauf des Phasenwicklungsstromes und der Eigeninduktion einmal vorlaufend und einmal nachlaufend,
- Fig. 7:: die Darstellung nach Fig. 6 bei fallendem Phasenwicklungsstrom,
- Fig. 8:: zwei Beispiele für den Spannungsverlauf an einer Phase eines sinuskommutierten Motors und
- Fig. 9:: den Verlauf von Phasenwicklungsstrom und an der Phasenwicklung anliegender Spannung vor, während und nach der Abschaltung der Versorgungsspannung.

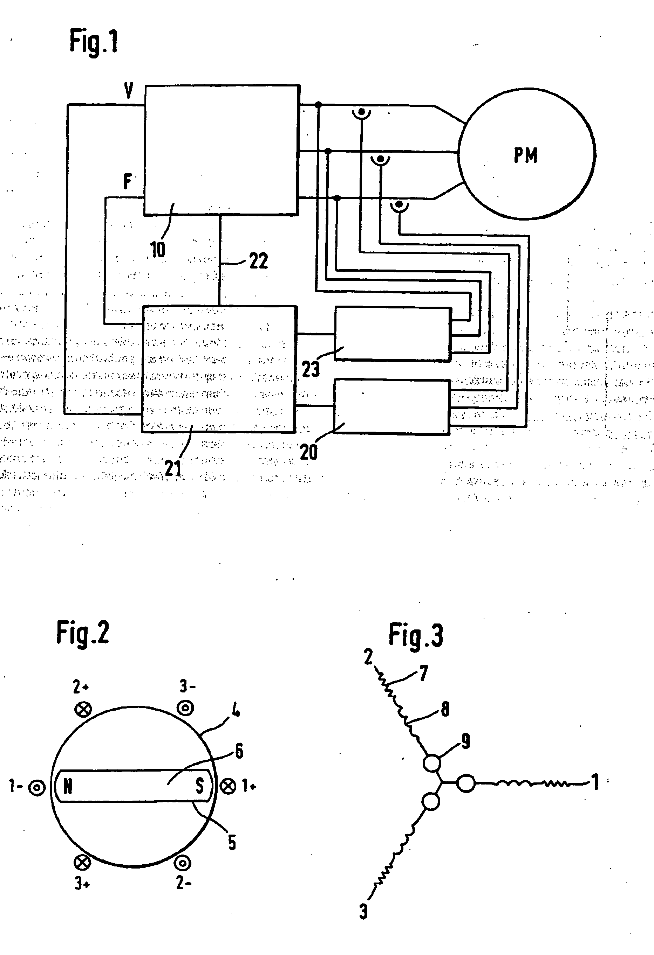

Der prinzipielle Aufbau eines Dreiphasen-Permanentmagnetmotors PM, dessen Ansteuerung hier beispielhaft erläutert wird, ist den Fig. 2 und 3 zu entnehmen. Der Motor PM weist im Stator 4 drei Wicklungen 1, 2 und 3 auf, die jeweils einer Phase zugeordnet sind. Die Wicklungen 1, 2, 3 sind in Fig. 2 in üblicher Weise dargestellt, wobei neben den Bezugsziffern ein Plus- oder Minuszeichen steht, welches beispielhaft die an den Wicklungen 1 bis 3 in einem bestimmten Zeitpunkt anliegenden Spannungen kennzeichnet.

Innerhalb des Stators 4 ist ein Rotor 5 drehbar gelagert. Dieser Rotor weist mindestens einen Permanentmagneten 6 auf, dessen Pole quer zur Drehachse angeordnet sind. Es versteht sich, dass anstelle des in Fig. 2 symbolisch dargestellten Einzelmagneten 6 mehrere sternförmig verteilte Magnete angeordnet sein können. Auch können die Wicklungen 1, 2, 3 (Phasenwicklungen) jeweils durch eine Anzahl von sternförmig im Rotor angeordneten Wicklungsteile gebildet sein, wie dies an sich bekannt ist.

Ein Ersatzschaltbild für einen solchen Motor PM zeigt Fig. 3, wobei mit 7 ein Widerstand, mit 8 eine Induktivität und mit 9 ein Generator gekennzeichnet ist, die phasenweise in dieser Reihenfolge sternförmig zusammengeschaltet sind. Während Widerstand 7 und Induktivität 8 den passiven Teil einer Motorphasenwicklung 1, 2 oder 3 darstellen, bildet der Generator 9 den aktiven Teil derselben. Dieses Generatorsymbol verdeutlicht, dass jede Phasenwicklung des Motors zugleich auch einen Generator bildet, in dem eine Spannung induziert wird, die eine gegenelektromotorische Kraft (BEMF - Back Electromotive Force) bildet, während die elektromotorische Kraft (EMF - Electromotive Force) durch den passiven Teil des Motors erzeugt wird.

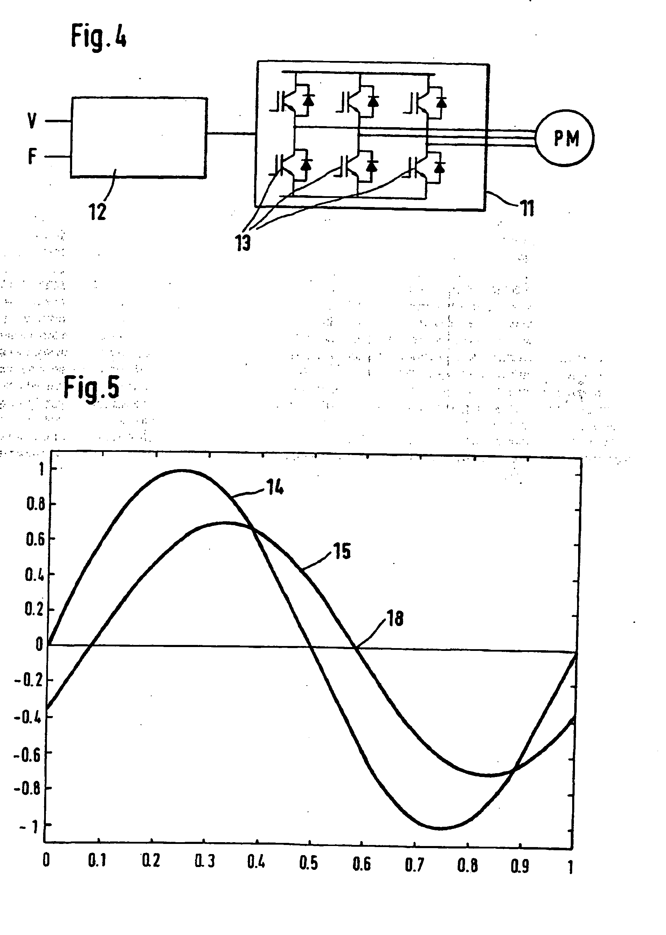

Angesteuert wird ein solcher Motor üblicherweise durch einen Spannungs-Frequenzumrichter 10 - nachfolgend Umrichter genannt. Derartige Umrichter 10 bestehen üblicherweise - sofern sie mit Wechsel- oder Drehstrom betrieben werden - aus einem Gleichrichter, einem Zwischenkreis sowie einem Wechselrichter, denen ein Steuer- und Regelkreis zugeordnet ist. Bei der Darstellung nach Fig. 4 ist lediglich der Wechselrichter, also der Leistungsteil 11 des Umrichters sowie der diesen beaufschlagende Steuer- und Regelkreis 12 mit den Eingängen V und F verbunden, wobei V für Voltage und F für Frequency steht, was symbolisieren soll, dass in Abhängigkeit der dort anstehenden Signalgröße die Spannung bzw. die Frequenz am Ausgang des Leistungsteils 11 gesteuert wird. Der Leistungsteil 11 besteht üblicherweise aus sechs elektronischen Schaltern 13, beispielsweise Thyristoren, die jeweils paarweise einer Motorphase zugeordnet sind, wobei die oberen drei Schalter für die Erzeugung des Spannungssignals mit positiven Vorzeichen und die unteren drei zur Erzeugung des Spannungssignals mit negativen Vorzeichen dienen. Mit einem solchen ebenfalls an sich bekannten Umrichter 10 können praktisch beliebige Signalverläufe zur Ansteuerung des Motors PM erzeugt werden.

Der Motor PM wird, wie einleitend dargelegt, sinuskommutiert betrieben, d. h. dass der Steuer- und Regelkreis 12 entsprechend den an den Eingängen V und F anliegenden Signalen für jede Phasenwicklung gesondert einen sinusförmigen Spannungsverlauf erzeugt, wobei die Spannungsverläufe bezogen auf eine Vollwelle um 120° zueinander versetzt sind. In Fig. 5 ist beispielhaft der Spannungsverlauf 14 für eine der Phasenwicklungen 1, 2 oder 3 dargestellt. Wird diese sich zeitlich ändernde Spannung 14 an eine der Phasenwicklungen 1, 2 oder 3 des Motors angelegt, wie dies im Betrieb durch den Umrichter 10 erfolgt, so stellt sich in der entsprechenden Phasenwicklung ein dazu phasenverschobener Stromverlauf 15 ein.

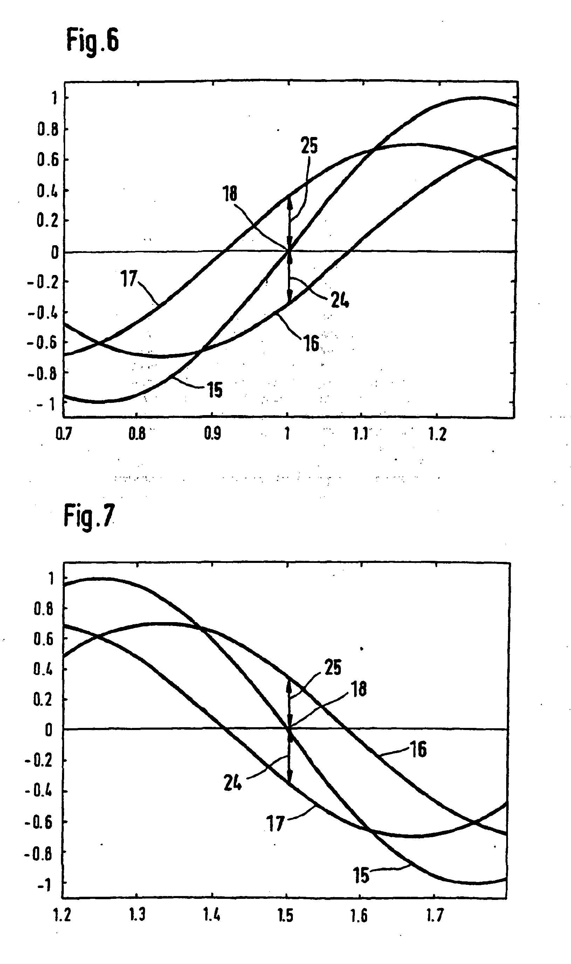

In Fig. 6 ist ein Teil der den zeitlichen Stromverlauf darstellenden Kurve 15 dargestellt, und zwar der Teil, bei dem der Strom von seinem negativen Maximum bis zur Null ansteigt, um dann weiter bis zu seinem positiven Maximum anzusteigen. Weiterhin ist in Fig. 6 ein Spannungsverlauf 16 dargestellt, der dem Stromverlauf 15 nacheilt, sowie ein Spannungsverlauf 17, der dem Stromverlauf 15 voreilt. Die Spannungsverläufe 16 und 17 sind beispielhaft zu verstehen und zeigen zwei Konstellationen, in denen die Rotorposition nicht mit der im Stator erzeugten Felddrehung übereinstimmt. Der Spannungsverlauf 16 bzw. 17 ist der, der sich innerhalb einer Motorphasenwicklung durch Eigeninduktion einstellt, und zwar in der Phasenwicklung, deren Stromverlauf mit 15 gekennzeichnet ist, die also vom Umrichter 11 spannungsversorgt ist.

Die gemäß den Kurven 16 oder 17 durch Eigeninduktion bewirkten Spannungsverläufe können bei anliegender Netzversorgung ohne aufwendige elektronische Hilfsmittel nicht gemessen werden. Auf einfache Weise, d. h. mit Hilfe eines Spannungsmessers hingegen können Sie gemessen werden, wenn die entsprechende Phasenwicklung zumindest während des Messvorgangs vom Versorgungsnetz getrennt wird oder solange die Versorgungsspannung Null ist. Diese Trennung kann bei entsprechender Ansteuerung des Umrichters 10 in einfacher Weise dadurch erfolgen, dass die beiden Schalter 13 dieser Phase so geschaltet werden, dass die entsprechende Phasenwicklung vom Netz getrennt ist.

Völlig ohne Last, d. h. Leistung, lässt sich jedoch nur dann schalten, wenn der Phasenwicklungsstrom Null ist. Dieser Punkt ist in den Fig. 5 bis 7 mit 18 gekennzeichnet. Es ist daher, wie dem Schaltbild nach Fig. 1 zu entnehmen ist, eine Messeinrichtung 20 vorgesehen, welche den Nulldurchgang des Stromverlaufes 15 einer jeden Phase des Motors PM ermittelt, um dann ein entsprechendes Signal an einen Mikroprozessor 21 zu geben, der einerseits die Steuereingänge F und V des Umrichters 10 und andererseits über eine Signalleitung 22 direkt mit dem Steuer- und Regelkreis 12 des Umrichters 10 zur Schaltung der Schalter 13 verbunden ist.

Die Messeinrichtung 20 vermittelt nicht den vollständigen Stromverlauf 15 in einer jeden Phasenwicklung 1, 2 oder 3, sondern lediglich den Nulldurchgang des Stromverlaufes, und zwar in jeder der Phasenwicklungen 1, 2, 3 und darüber hinaus, ob der Stromverlauf dabei von Minus nach Plus ansteigend oder abfallend ist. Letztere Information kann alternativ auch aus dem Steuer- und Regelkreis 12 des Umrichters 10 abgeleitet werden.

Sobald die Messeinrichtung 20 in einer Phasenwicklung 1, 2 oder 3 den Nulldurchgang des Stromverlaufes detektiert hat, wird über den Mikroprozessor 21 und die Signalleitung 22 mittels des zugehörigen Schalterpaares 13 die entsprechende Phasenwicklung vom Versorgungsnetz getrennt. Praktisch gleichzeitig oder unmittelbar danach wird eine weitere Messeinrichtung 23 in Form eines Spannungsmessers aktiviert, welche die dann in derselben Phasenwicklung anliegende Spannung misst, und zwar zumindest dem Vorzeichen nach. In dem Diagramm nach Fig. 6 wäre dies beispielsweise eine negative Spannung 24 bei einem Spannungsverlauf gemäß Kurve 16 bzw. eine positive Spannung 25 bei einem Spannungsverlauf gemäß Kurve 17. Die Messeinrichtung 23 beinhaltet darüber hinaus einen Komparator, der feststellt, ob sich eine positive Spannung 25, eine negative Spannung 24 oder die Spannung Null im Messzeitpunkt ergibt. Ist die Spannung Null, so stimmt der Nulldurchgang der Eigeninduktion mit dem des Stromverlaufes in derselben Phasenwicklung überein, d. h. der Motor läuft optimal, elektrisches Drehfeld und Magnetfeld stimmen überein, es bedarf keiner Regelung. Ergibt sich jedoch eine positive oder negative Spannung, wie beispielhaft in Fig. 6 anhand der Kurven 16 und 17 dargestellt, so eilt die Eigeninduktion dem Stromverlauf nach bzw. vor, was durch entsprechenden Regeleingriff korrigiert werden soll. Je nach Vorzeichen steuert der Mikroprozessor 21 den Umrichter 10, insbesondere den Steuer- und Regelkreis 12 an. Im konkreten Fall gemäß Fig. 2 und einem Spannungsverlauf nach der Kurve 16, eilt die Eigeninduktion dem Stromverlauf nach. Die im Nulldurchgang des Stromes ermittelte Induktionsspannung 24 ist negativ, was bei ansteigendem Motorstrom ein Nacheilen der Eigeninduktion bedeutet. Der Mikroprozessor 21 steuert daher den Umrichter mit einer geringeren Frequenz und/oder einer höheren Spannung an, um so diese Phasenverschiebung zwischen Stromverlauf und Eigeninduktion zu korrigieren. Im übrigen wird unmittelbar nach erfolgter Messung die Spannung durch Schließen des zugehörigen Schalterpaares 13 an die entsprechende Phasenwicklung wieder angelegt. Da die Spannungsbeaufschlagung der einzelnen Phasenwicklung um 120° versetzt erfolgt, fallen auch die Nulldurchgänge der Phasenwicklungsströme nie zusammen, es kann daher für alle Phasenströme dieselbe Messeinrichtung 20 (Nulldurchgangsdetektor) sowie dieselbe Messeinrichtung 23 eingesetzt werden, auch wenn in jedem Nulldurchgang eines jeden Phasenwicklungsstromes eine Messung erfolgt. Ergibt sich bei der Messung eine positive Spannung 25, wie anhand der Kurve 17 dargestellt, so bedeutet dies bei steigendem Stromverlauf, dass die Eigeninduktion voreilt und die Ansteuerungsfrequenz für den Motor zu erhöhen bzw. die Spannung abzusenken ist, was über den Mikroprozessor 21 geregelt wird.

Anhand von Fig. 2 ist die umgekehrte Konstellation bei fallendem Motorstrom dargestellt. In diesem Falle muss die Regelung genau umgekehrt reagieren, um den Phasenwicklungsstrom mit der Eigeninduktion im Nulldurchgang in Übereinstimmung zu bringen.

Die Eigeninduktion wird gemäß der Erfindung nicht durch die vorbeschriebene Spannungsmessung ermittelt, sondern dadurch, dass der Phasenwicklungsstrom bei kurzgeschlossener Motorphasenwicklung mittels Messeinrichtung 20 erfasst wird. Dann ist die Messeinrichtung 23 nicht erforderlich. Das Kurzschließen der entsprechenden Motorphasenwicklung erfolgt mittels der entsprechenden Schalter 13, gesteuert durch den Mikroprozessor 21 über die Signalleitung 22. Dabei wird die entsprechende Motorphasenwicklung vom Versorgungsnetz getrennt oder aber die Messung durchgeführt, solange die Versorgungsspannung dieser Motorphasenwicklung Null ist. Insbesondere dann, wenn die Regelung lediglich das Vorzeichen der Phasenverschiebung und nicht deren Betrag berücksichtigt, bietet sich dieses vereinfachte, mit nur einer Messeinrichtung 20 auskommende Verfahren an.

In einer Weiterbildung der Erfindung kann die Regelung dahingehend verfeinert sein, dass durch die Messeinrichtung 23 nicht nur das Vorzeichen der Phasenverschiebung, sondern auch dessen Größe, d. h. die Spannung der Eigeninduktion im Nulldurchgang des zugehörigen Phasenwicklungsstromes ermittelt und weiterverarbeitet wird, so dass bei großen Abweichungen eine größere Gegensteuerung als bei kleineren erfolgen kann.

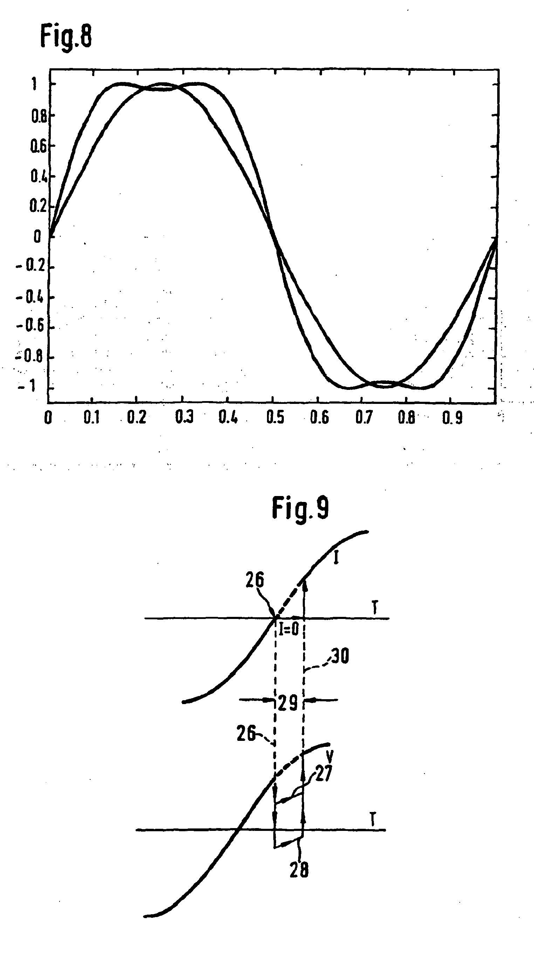

Anhand von Fig. 8 soll verdeutlicht werden, dass das vorliegende Verfahren nicht nur bei Spannungsbeaufschlagung mit reinen sinusförmigen Signalen, sondern auch mit abgewandelten Signalen wie dort dargestellt durchgeführt werden kann.

In Fig. 9 ist der Spannungs- und Stromverlauf vor, während und nach dem Abschalten der an einer Motorphasenwicklung anliegenden Versorgungsspannung zum Zwecke der Messung der Eigeninduktion dargestellt. Der in Fig. 9 mit 26 gekennzeichnete Punkt kennzeichnet den Zeitpunkt, an dem der Wicklungsstrom Null ist. In diesem Augenblick kann, da kein Strom fließt, ungeachtet der anliegenden Versorgungsspannung lastfrei geschaltet werden. Die Spannung wird also zum Zeitpunkt 26 abgeschaltet, wie dies im unteren Diagramm in Fig. 9 durch die nach unten laufenden Pfeile auf der Linie 26 dargestellt ist. Auch wenn die externe Versorgungsspannung durch den entsprechenden Schaltvorgang von der Motorphasenwicklung genommen wird, so stellt sich doch je nach der Lage zwischen rotierendem Drehfeld des Stators und dem darin umlaufenden Rotor entweder eine positive Spannung 27 oder eine negative Spannung 28 ein, welche das BEMF-Signal repräsentiert, d. h. welche durch Eigeninduktion hervorgerufen ist. Es muss nun lediglich in diesem Zeitfenster 29, solange die externe Spannung abgeschaltet ist, festgestellt werden, ob eine Eigeninduktion 27 oder eine Eigeninduktion 28 vorliegt. Sobald dies festgestellt ist, kann die Spannung wieder angelegt werden, wie dies zum Zeitpunkt 30 der Fall ist. Da während der gesamten Abschaltzeit der in dieser Motorphasenwicklung fließende Strom Null ist, kann auch beim Wiederanlegen der Versorgungsspannung zum Zeitpunkt 30 trotz inzwischen gestiegener Spannung lastfrei geschaltet werden. Nach diesem kurzen Messvorgang läuft der Motor dann wie vorbeschrieben weiter.

In den vorstehend beschriebenen Ausführungsbeispielen ist eine Kommutierungsregelung beschrieben worden, bei der die Phasenlage der Eigeninduktion mit der des Phasenwicklungsstroms derselben Motorphasenwicklung in Übereinstimmung gebracht wird. Nur der Vollständigkeit halber sei darauf hingewiesen, dass das erfindungsgemäße Verfahren auch für Kommutierungen angewendet werden kann, in denen keine Übereinstimmung, sondern ein bestimmtes Verhältnis zwischen diesen beiden Größen eingestellt werden soll. Des Weiteren ist es grundsätzlich auch nicht erforderlich, den Motorphasenwicklungsstrom und die Eigeninduktion in derselben Phase zu messen, da die Phasen üblicherweise in einem festen Winkel zueinander stehen, so dass bei Messung in einer anderen Phase eine Umrechnung auf dieselbe Phase möglich ist.

### Bezugszeichenliste

- 1, 2, 3 -: Wicklungen bzw. Motorphasenwicklung
- 4 -: Stator
- 5 -: Rotor
- 6 -: Magnet
- 7 -: Widerstand
- 8 -: Induktivität
- 9 -: Generator
- 10 -: Umrichter
- 11 -: Leistungsteil
- 12 -: Steuer- und Regelkreis
- 13 -: Schalter
- 14 -: Spannungsverlauf
- 15 -: Stromverlauf
- 16 -: Spannungsverlauf (Eigeninduktion)
- 17 -: Spannungsverlauf (Eigeninduktion)
- 18 -: Nulldurchgang
- 20 -: Messeinrichtung (Nulldurchgangsdetektor)
- 21 -: Mikroprozessor
- 22 -: Signalleitung
- 23 -: Messeinrichtung
- 24 -: negative Spannung
- 25 -: positive Spannung
- 26 -: Zeitpunkt Nulldurchgang des Stromes
- 27 -: Eigeninduktion positiv
- 28 -: Eigeninduktion negativ
- 29 -: Messzeit
- 30 -: Zeitpunkt Wiedereinschalten der Spannung
- V -: Spannungssteuereingang von 10
- F -: Frequenzsteuereingang von 10
- PM -: Motor

## Patentansprüche

1. Verfahren zur Regelung eines spannungs-/frequenzumrichtergesteuerten ein oder mehrphasigen Permanentmagnetmotors (PM), der mit sinusförmiger oder abgewandelt sinusförmiger Wechselspannung beaufschlagt wird und bei dem dem Umrichter (10) eine der induzierten Spannung (16, 17) in wenigstens einer Phasenwicklung (1, 2, 3) des Motors (PM) entsprechende Größe zur Regelung zugeführt wird, wobei die Eigeninduktion (BEMF) der wenigstens einen Motorphasenwicklung (1, 2, 3) gemessen wird, wenn der Phasenwicklungsstrom dieser Motorphasenwicklung (1, 2, 3) Null erreicht hat und die Motorphasenwicklung (1, 2, 3), deren Eigeninduktion (16, 17) gemessen wird, vor Beginn bis zum Abschluss der Messung vom Versorgungsnetz getrennt wird, und dann ermittelt wird, ob die Phasenlage der Eigeninduktion mit der des Phasenwicklungsstroms (15) einer Motorphasenwicklung (1, 2, 3) in einem vorbestimmten Verhältnis steht oder nicht, und dann, wenn die Phasenlagen nicht in diesem vorbestimmten Verhältnis stehen und die der Eigeninduktion (16, 17) der des Phasenwicklungsstroms (15) demgegenüber voraneilt, die dem Umrichter zugeführte Größe so erzeugt wird, dass er die dem Motor zugeführte Frequenz im nächsten Regelintervall erhöht, und /oder die den Motor zugeführte Spannung im nächsten Regelintervall absenkt, bis die Phasenlagen der Eigeninduktion (16, 17) und des Phasenwicklungsstroms (15) in dem vorbestimmten Verhältnis stehen, und wenn die Phasenlage der Eigeninduktion (16, 17) der des Phasenwicklungsstroms (15) demgegenüber nacheilt, die dem Umrichter (10) zugeführte Größe (V, F) so erzeugt wird, dass er die dem Motor zugeführte Frequenz im nächsten Regelintervall verringert und/oder die dem Motor zugeführte Spannung im nächsten Regelfall erhöht, bis die Phasenlagen der Eigeninduktion (16, 17) und des Phasenwicklungsstroms (15) in diesem vorbestimmten Verhältnis stehen, wobei die Motorphasenwicklung (1, 2, 3), deren Eigeninduktion (16, 17) ge- messen wird, kurzgeschlossen wird, und die Eigeninduktion durch Strommessung in dieser Motorphasenwicklung erfasst wird.

2. Verfahren nach Anspruch 1, **dadurch gekennzeichnet, dass** es zur Kommutierung eines ein- oder mehrphasigen Permanentmagnetmotors (PM) eingesetzt wird, wobei das vorbestimmte Verhältnis zwischen Phasenlage der Eigeninduktion (16, 17) und Phasenlage des Phasenwicklungsstroms (15) durch Übereinstimmung der beiden Phasenlagen bestimmt ist.

3. Verfahren nach einem der vorgehenden Ansprüche, bei dem die dem Umrichter (10) zugeführte Größe so erzeugt wird, dass der Umrichter die Frequenz und/oder Spannung im nächsten Regelintervall in Abhängigkeit zum gemessenen Phasenunterschied zwischen der Eigeninduktion (16, 17) und dem Phasenwicklungsstrom (15) erhöht oder verringert.

4. Verfahren nach einem der vorhergehenden Ansprüche, bei dem die Eigeninduktion (16, 17) jeder Motorphasenwicklung (1, 2, 3) gemessen wird.

5. Verfahren nach einem der vorhergehenden Ansprüche, bei dem die Eigeninduktion (16, 17) einer Motorphasenwicklung (1, 2, 3) an mindestens zwei Zeitpunkten gemessen wird, an denen der Phasenwicklungsstrom (15) der entsprechenden Motorphasenwicklung (1, 2, 3) aufeinanderfolgend Null ist.

6. Verfahren nach einem der vorhergehenden Ansprüche, bei dem die Eigeninduktion (16, 17) pro Motorphasenwicklung (1, 2, 3) zu zwei Zeitpunkten gemessen wird, an denen jeweils ein Nulldurchgang des Phasenwicklungsstroms (15) stattfindet.

7. Verfahren nach einem der vorhergehenden Ansprüche, bei dem das Messsignal das jeweilige positive oder negative Vorzeichen der Phasenlage der Eigeninduktion (16, 17) gegenüber dem Nulldurchgang (18) des Phasenwicklungsstroms (15) angibt, wobei unter der Voraussetzung eines steigenden Phasenwicklungsstroms (15) bei positivem Messsignal (25) die dem Motor (PM) zugeführte Frequenz im nächsten Regelintervall erhöht und/oder die dem Motor zugeführte Spannung im nächsten Regelintervall abgesenkt wird und bei negativem Messsignal (24) die dem Motor zugeführte Frequenz im nächsten Regelintervall verringert und /oder die dem Motor zugeführte Spannung im nächsten Regelintervall erhöht wird oder umgekehrt, wenn der Phasenwicklungsstrom (15) fällt.

8. Vorrichtung zur Regelung eines spannungs-/frequenzumrichtergesteuerten ein oder mehrphasigen Permanentmagnetmotors (PM), mit einem Spannungs-/Frequenzumrichter (10), der jeder Motorphasenwicklung (1, 2, 3) eine annähernd sinusförmige Wechselspannung mit einer pro Regelintervall festen Frequenz zuführt und mit einer Regeleinrichtung (21), die dem Umrichter (10) eine der induzierten Spannung in wenigstens einer Motorphasenwicklung (1, 2, 3) entsprechende Größe zur Frequenz- und/oder Spannungsregelung zuführt, und mit einer mit der Regeleinrichtung (21) verbundenen Auswerteeinrichtung, die dazu eingerichtet ist zu ermitteln, ob die Phasenlage der Eigeninduktion (16, 17) mit der des Phasenwicklungsstroms (15) derselben Motorphasenwicklung in einem vorbestimmten Verhältnis steht oder nicht und die ein entsprechendes Auswertesignal der Regeleinrichtung (21) zuführt, wobei die Regeleinrichtung, wenn das Auswertesignal der Auswerteeinrichtung angibt, dass das Verhältnis der Phasenlage jeweils der Eigeninduktion (16, 17) und des Phasenwicklungsstroms (15) nicht dem vorbestimmten entspricht, bei demgegenüber voreilender Phase der Eigeninduktion (17) dem Umrichter (10) ein Regelsignal zuführt, das eine Frequenzerhöhung und/oder Spannungsabsenkung im nächsten Regelintervall bewirkt, bis die Phasenlagen der Eigeninduktion (16, 17) und des Wicklungsphasenstroms (15) in dem vorbestimmten Verhältnis stehen und bei demgegenüber nacheilender Phase der Eigeninduktion (16) dem Umrichter (10) ein Regelsignal zuführt, das eine Frequenzverringerung und/oder Spannungserhöhung im nächsten Regelintervall bewirkt, bis die Phasenlagen der Eigeninduktion (16, 17) und des Phasenwicklungsstroms (10) in dem vorbestimmten Verhältnis stehen oder in zuvor festgelegten Grenzen liegen, wobei eine erste mit mindestens einer Motorphasenwicklung verbundene Messeinrichtung (23) zur Messung der Eigeninduktion (BEMF) wenigstens dieser einen Motorphasenwicklung und eine zweite mit mindestens einer Motorphasenwicklung verbunden Messeinrichtung (20) zur Erfassung des Stroms, der durch diese Motorphasenwicklung fließt, vorgesehen sind, die zweite Messeinrichtung (20) die Nulldurchgänge (18) des Phasenwicklungsstromes (15) mindestens einer Motorphase (1, 2, 3) ermittelt, und die Auswerteeinrichtung das jeweilige Vorzeichen der gemessenen Phasenlage der Eigeninduktion (16, 17) bei einem Nulldurchgang (18) des zugehörigen Phasenwicklungsstromes (15) ermittelt, wobei ein positives Auswertesignal (25) der ersten Auswerteeinrichtung eine voreilende Phase der Egeninduktion (17) und ein negatives Auswertesignal (24) eine nacheilende Phase der Eigeninduktion (16) angeben, und wobei Mittel vorgesehen sind, welche die Phasenwicklung vom Versorgungsnetz trennen wenn der Wicklungsstrom den Wert Null erreicht hat und die Eigeninduktion ermitteln und danach die Phasenwicklung wieder mit dem Versorgungsnetz verbinden, wobei die Motorphasenwicklung (1, 2, 3), deren Eigeninduktion (16, 17) ge- messen wird, kurzgeschlossen wird, und die Eigeninduktion durch Strommessung in dieser Motorphasenwicklung erfasst wird.

9. Vorrichtung nach Anspruch 8, **dadurch gekennzeichnet**e, dass die Regeleinrichtung (21) dem Umrichter (10) ein Stellsignal zugeführt, das die dem Motor (PM) angelegte Frequenz und/oder Spannung in Abhängigkeit zum erfassten Phasenunterschied zwischen der Eigeninduktion (18, 17) und deren Phasenwicklungsstrom (15) erhöht, verringert oder konstant hält.

## Claims

1. A method for the closed-loop control of a voltage/frequency converter controlled single-phase or polyphase permanent magnet motor (PM) which is subjected to a sinusoidal or modified sinusoidal alternating voltage and with which for the closed-loop control, a variable corresponding to the induced voltage (16, 17) in at least one phase winding (1, 2, 3) of the motor (PM) is led to the converter (10), wherein the self-induction (BEMF) of the at least one motor phase winding (1, 2, 3) is measured when the phase winding current of this motor phase winding (1, 2, 3) has reached zero, and the motor phase winding (1, 2, 3), whose self-induction (16, 17) is measured, is disconnected from the mains supply before the beginning up to the end of the measurement, and then it is determined whether the phase position of the self-induction is in a predefined relationship with that of the phase winding current (15) of a motor phase winding (1, 2, 3) or not, and if the phase positions are not in this predefined relationship and that of the self-induction (16, 17) in contrast leads that of the phase winding current (15), the variable led to the converter is produced such that the converter increases the frequency led to the motor in the next control interval and/or reduces the voltage led to the motor in the next control interval, until the phase positions of the self-induction (16, 17) and of the phase winding current (15) are in the predefined relationship, and if the phase position of the self-induction (16, 17) in contrast lags that of the phase winding current (15), the variable (V, F) led to the converter (10) is produced such that the converter reduces the frequency led to the motor in the next control interval and/or increases the voltage led to the motor in the next control interval, until the phase positions of the self-induction (16, 17) and of the phase winding current (15) are in this predefined relationship, wherein the motor phase winding (1, 2, 3) whose self-induction (16,17) is measured, is short-circuited, and the self-induction is detected by current measurement in this motor phase winding.

2. A method according to claim 1, **characterised in that** it is applied for commutating a single-phase or polyphase permanent magnet motor (PM), wherein the predefined relationship between the phase position of the self-induction (16, 17) and the phase position of the phase winding current (15) is preferably defined by agreement of the two phase positions.

3. A method according to one of the preceding claims, with which the variable led to the converter (10) is produced such that the converter increases or reduces the frequency and/or voltage in the next control interval, in dependence on the measured phase difference between the self-induction (16, 17) and the phase winding current (15).

4. A method according to one of the preceding claims, with which the self-induction (16, 17) of each motor phase winding (1, 2, 3) is measured.

5. A method according to one of the preceding claims, with which the self-induction (16, 17) of a motor phase winding (1, 2, 3) is measured at at least two points in time, at which the phase winding current (15) of the respective motor phase winding (1, 2, 3) is consecutively zero.

6. A method according to one of the preceding claims, with which the self-induction (16, 17) per motor phase winding (1, 2, 3) is measured at two points in time at which in each case a zero-crossing of the phase winding current (15) takes place.

7. A method according to one of the preceding claims, with which the measurement signal indicates the respective positive or negative polarity of the phase position of the self-induction (16,17) with respect to the zero-crossing (18) of the phase winding current (15), wherein on the assumption of a rising phase winding current (15) with a positive measurement signal (25), the frequency led to the motor (PM) is increased in the next control interval and/or the voltage led to the motor is reduced in the next control interval, and with a negative measurement signal (24), the frequency led to the motor is reduced in the next control interval and/or the voltage led to the motor is increased in the next control interval, or the other way round if the phase winding current (15) falls.

8. A device for the closed-loop control of a voltage/frequency converter controlled single-phase or polyphase permanent magnet motor (PM), with a voltage/frequency converter (10) which supplies each motor phase winding (1, 2, 3) with an approximately sinusoidal alternating voltage with a frequency which is fixed per control interval, and with a closed-loop control means (21) which for the frequency closed-loop control and/or voltage closed-loop control, leads a variable corresponding to the induced voltage in at least one motor phase winding (1, 2, 3), to the converter (10), and with an evaluation means which is connected to the closed-loop control means (21) and which is set up in order to determine whether the phase position of the self induction (16, 17) is in a defined relationship with that of the phase winding current (15) of the same motor phase winding or not, and which leads a corresponding evaluation signal to the closed-loop control means (21), wherein the closed-loop control means, when the evaluation signal of the evaluation means indicates that the relationship of the phase position in each case of the self-induction (16,17) and of the phase winding current (15) does not correspond to the predefined one, with a phase of the self-induction (17) which leads with respect to this, a control signal is led to the converter (10), which effects a frequency increase and/or voltage reduction in the next control interval until the phase positions of the self-induction (16, 17) and of the winding phase current (15) are in the predefined relationship, and with a phase of the self-induction (16) which lags with respect to this, a control signal is led to the converter (10), which effects a frequency reduction and/or voltage increase in the next control interval, until the phase positions of the self-induction (16, 17) and of the phase winding current (10) are in the predefined relationship or lie in previously fixed limits, wherein a first measurement means (23) which is connected to at least one motor phase winding and is for measuring the self-induction (BEMF) of at least this one motor phase winding, and a second measurement means (20) which is connected to at least one motor phase winding and is for detecting the current which flows through this motor phase winding, are provided, the second measurement means (20) determining the zero-crossings (18) of the phase winding current (15) of at least one motor phase (1, 2, 3), and the evaluation means determining the respective polarity of the measured phase position of the self-induction (16, 17) with a zero-crossing (18) of the associated phase winding current (15), wherein a positive evaluation signal (25) of the first evaluation means indicates a leading phase of the self-induction (17), and a negative evaluation signal (24) indicates a lagging phase of the self-induction (16), and wherein means are provided which disconnect the phase winding from the supply mains if the winding current has reached the value zero, and which determine the self-induction and thereafter reconnect the phase winding to the mains supply, wherein the motor phase winding (1, 2, 3) whose self-induction (16, 17) is measured, is short-circuited, and the self-induction is detected by current measurement in this motor phase winding.

9. A device according to claim 8, **characterised in that** the closed-loop control means (21) leads an input signal to the converter (10), said signal increasing, reducing or keeping constant the frequency and/or voltage applied to the motor (PM), in dependence on the detected phase difference between the self-induction (16, 17) and the phase winding current (15).

## Revendications

1. Procédé de régulation d'un moteur à aimant permanent, monophasé ou polyphasé, commandé par un convertisseur de tension/fréquence, qui est alimenté par une tension alternative sinusoïdale ou sinusoïdale modifiée et dans lequel on délivre au convertisseur (10) une grandeur de régulation correspondant à la tension induite (16, 17) dans au moins un enroulement de phase (1, 2, 3) du moteur (PM), dans lequel l'induction propre (BEMF) du ou des enroulements de phase du moteur (1, 2, 3), au moins au nombre de un, est mesurée lorsque le courant de l'enroulement de phase de cet enroulement de phase du moteur (1, 2, 3) a atteint la valeur zéro et que l'enroulement de phase du moteur (1, 2, 3) dont l'induction propre (16, 17) est mesurée est séparé de l'alimentation réseau avant le début et jusqu'à la fm de la mesure, puis dans lequel on détermine si la position de phase de l'induction propre présente ou non un rapport prédéterminé à celle du courant de l'enroulement de phase (15) d'un enroulement de phase du moteur (1, 2, 3), puis, lorsque les positions de phase ne présentent pas ce rapport prédéterminé et que celle de l'induction propre (16, 17) est en avance sur celle du courant de l'enroulement de phase (15), la grandeur transmise au convertisseur est générée de façon telle qu'elle augmente la fréquence amenée au moteur à l'intervalle de régulation suivant, et/ou abaisse la tension amenée au moteur à l'intervalle de régulation suivant, jusqu'à ce que les positions de phase de l'induction propre (16, 17) et du courant de l'enroulement de phase (15) présentent le rapport prédéterminé, et lorsque la position de phase de l'induction propre (16, 17) est en retard sur celle du courant de l'enroulement de phase (15), la grandeur (V, F) transmise au convertisseur (10) est générée de façon telle qu'elle réduit la fréquence amenée au moteur à l'intervalle de régulation suivant et/ou augmente la tension amenée au moteur à l'intervalle de régulation suivant, jusqu'à ce que les positions de phase de l'induction propre (16, 17) et du courant de l'enroulement de phase (15) présentent ce rapport prédéterminé, dans lequel l'enroulement de phase du moteur (1, 2, 3) dont l'induction propre (16, 17) est mesurée, est court-circuité et l'induction propre est détectée par la mesure de courant dans cet enroulement de phase du moteur.

2. Procédé selon la revendication 1, **caractérisé en ce qu'**il est utilisé pour la commutation d'un moteur à aimant permanent (PM) monophasé ou polyphasé, où le rapport prédéterminé entre la position de phase de l'induction propre (16, 17) et la position de phase du courant de l'enroulement de phase (15) est déterminé par la concordance des deux positions de phase.

3. Procédé selon l'une des revendications précédentes, dans lequel la grandeur transmise au convertisseur (10) est générée de façon telle que le convertisseur augmente ou réduit la fréquence et/ou la tension à l'intervalle de régulation suivant en fonction de la différence de phase mesurée entre l'induction propre (16, 17) et le courant de l'enroulement de phase (15).

4. Procédé selon l'une des revendications précédentes, dans lequel l'induction propre (16, 17) de chaque enroulement de phase du moteur (1, 2, 3) est mesurée.

5. Procédé selon l'une des revendications précédentes, dans lequel l'induction propre (16, 17) d'un enroulement de phase du moteur (1, 2, 3) est mesurée à au moins deux moments auxquels le courant de l'enroulement de phase (15) de l'enroulement de phase du moteur (1, 2, 3) correspondant est successivement égal à zéro.

6. Procédé selon l'une des revendications précédentes, dans lequel l'induction propre (16, 17) par enroulement de phase du moteur (1, 2, 3) est mesurée à deux moments auxquels s'opère respectivement un passage par zéro du courant de l'enroulement de phase (15).

7. Procédé selon l'une des revendications précédentes, dans lequel le signal de mesure fournit le signe positif ou négatif respectif de la position de phase de l'induction propre (16, 17) lors d'un passage par zéro (18) du courant de l'enroulement de phase (15), moyennant quoi, sous réserve d'un courant de l'enroulement de phase croissant (15), en cas de signal de mesure positif (25), la fréquence amenée au moteur (PM) à l'intervalle de régulation suivant est augmentée et/ou la tension amenée au moteur à l'intervalle de régulation suivant est diminuée, et en cas de signal de mesure négatif (24), la fréquence amenée au moteur est réduite à l'intervalle de régulation suivant et/ou la tension amenée au moteur est augmentée à l'intervalle de régulation suivant, ou inversement lorsque le courant de l'enroulement de phase (15) chute.

8. Dispositif de régulation d'un moteur à aimant permanent (PM), monophasé ou polyphasé, commandé par un convertisseur de tension/fréquence, comportant un convertisseur de tension/fréquence (10) qui délivre à chaque enroulement de phase du moteur (1, 2, 3) une tension alternative de forme approximativement sinusoïdale avec une fréquence fixe par intervalle de régulation, et comportant un dispositif de régulation (21) qui transmet au convertisseur (10) une grandeur, correspondant à la tension induite dans au moins un enroulement de phase du moteur (1, 2, 3), permettant de réguler la fréquence et/ou la tension, et comportant un dispositif d'évaluation relié au dispositif de régulation (21), qui est disposé pour déterminer si la position de phase de l'induction propre (16, 17) présente ou non un rapport prédéterminé à celle du courant de l'enroulement de phase (15) de ce même enroulement de phase du moteur et qui délivre un signal d'évaluation correspondant au dispositif de régulation (21), dans lequel le dispositif de régulation, lorsque le signal d'évaluation du dispositif d'évaluation indique que le rapport entre la position de phase respectivement de l'induction propre (16, 17) et du courant de l'enroulement de phase (15) ne correspond pas à ce qui est prédéterminé, où en cas de phase de l'induction propre (17) comparativement en avance, délivre au convertisseur (10) un signal de régulation qui provoque une augmentation de fréquence et/ou un abaissement de tension à l'intervalle de régulation suivant, jusqu'à ce que les positions de phase de l'induction propre (16, 17) et du courant de phase de l'enroulement (15) présentent le rapport prédéterminé, et où en cas de phase de l'induction propre (16) comparativement en retard, transmet au convertisseur (10) un signal de régulation qui provoque une réduction de fréquence et/ou une augmentation de tension à l'intervalle de régulation suivant, jusqu'à ce que les positions de phase de l'induction propre (16, 17) et du courant de l'enroulement de phase (10) présentent le rapport prédéterminé ou dans des limites fixées au préalable, dans lequel est prévu un premier dispositif de mesure (23) relié à au moins un enroulement de phase du moteur et destiné à mesurer l'induction propre (BEMF) au moins de cet enroulement de phase du moteur, et un second dispositif de mesure (20) relié à au moins un enroulement de phase du moteur et destiné à détecter le courant qui traverse cet enroulement de phase du moteur, où le second dispositif de mesure (20) détermine les passages par zéro (18) du courant de l'enroulement de phase (15) d'au moins une phase du moteur (1, 2, 3), et le dispositif d'évaluation détermine le signe respectif de la position de phase mesurée de l'induction propre (16, 17) lors d'un passage par zéro (18) du courant de l'enroulement de phase (15) associé, où un signal d'évaluation positif (25) du premier dispositif d'évaluation indique une phase en avance de l'induction propre (17) et un signal d'évaluation négatif (24) indique une phase en retard de l'induction propre (16), et dans lequel sont prévus des moyens qui isolent l'enroulement de phase du réseau d'alimentation lorsque le courant d'enroulement a atteint la valeur zéro, et déterminent l'induction propre et relient ensuite à nouveau l'enroulement de phase au réseau d'alimentation, dans lequel l'enroulement de phase du moteur (1, 2, 3) dont l'induction propre (16, 17) est mesurée, est court-circuité et l'induction propre est détectée par la mesure de courant dans cet enroulement de phase du moteur.

9. Dispositif selon la revendication 8, **caractérisé en ce que** le dispositif de régulation (21) transmet au convertisseur (10) un signal de réglage qui augmente, réduit ou maintient constante(s) la fréquence et/ou la tension appliquée(s) au moteur (PM) en fonction de la différence de phase détectée entre l'induction propre (18, 17) et son courant de l'enroulement de phase (15).
